# EUROPEAN PATENT SPECIFICATION

(11) **EP 4 002 526 B1**
(45) Date of publication and mention of the grant of the patent: **31.05.2023**
(21) Application number: 21208453.7
(22) Date of filing: 16.11.2021
(51) Int. Cl.: H01M 8/0273, H01M 8/2483, H01M 8/10

(54) **FUEL CELL**
BRENNSTOFFZELLE
PILE À COMBUSTIBLE

(30) Priority: 20.11.2020 JP 2020193282
(43) Date of publication of application: 25.05.2022
(73) Proprietor: Toyota Jidosha Kabushiki Kaisha, Toyota-shi, Aichi-ken, 471-8571 (JP)
(72) Inventor: NONOYAMA, Nobuaki, Toyota-shi, 471-8571 (JP); OTSU, Wataru, Toyota-shi, 471-8571 (JP); AONO, Haruyuki, Kariya-shi, 448-8651 (JP)
(74) Representative: J A Kemp LLP

(56) References cited:
- US-A1- 2015 295 266
- US-A1- 2019 173 102
- US-A1- 2019 326 614
- US-A1- 2020 185 747

## Description

### TECHNICAL FIELD

The disclosure relates to a fuel cell.

### BACKGROUND

A fuel cell (FC) is a power generation device comprising a single unit fuel cell (hereinafter, it may be simply referred to as "cell") or a fuel cell stack (hereinafter, it may be simply referred to as "stack") which is a stack of unit fuel cells (hereinafter may be referred to as "cells"), and it generates electrical energy by electrochemical reaction of fuel gas (such as hydrogen) and oxidant gas (such as oxygen and air). Throughout this disclosure, fuel gas and oxidant gas may be collectively and simply referred to as "reaction gas" or "gas" without any particular distinction.

In general, each unit fuel cell includes a membrane electrode assembly (MEA).

The membrane electrode assembly has a structure in which a catalyst layer and a gas diffusion layer are sequentially formed on both surfaces of a solid polymer electrolyte membrane (hereinafter, it may be simply referred to as "electrolyte membrane"). Accordingly, the membrane electrode assembly may be referred to as "membrane electrode gas diffusion layer assembly" (MEGA).

As needed, each unit fuel cell includes two separators sandwiching both sides of the membrane electrode gas diffusion layer assembly. In general, the separators have such a structure that a groove is formed as a reaction gas flow path on a surface in contact with the gas diffusion layer. The separators function as a collector of generated electricity.

In the fuel electrode (anode) of the fuel cell, the hydrogen (H₂) as the fuel gas which is supplied from the gas flow path and the gas diffusion layer, is protonated by the catalytic action of the catalyst layer, and the protonated hydrogen moves to the oxidant electrode (cathode) through the electrolyte membrane. Electrons are generated at the same time, and pass through an external circuit, perform work, and then move to the cathode. The oxygen (O₂) as the oxidant gas which is supplied to the cathode, reacts with protons and electrons on the cathode, thereby producing water. The produced water gives appropriate moisture to the electrolyte membrane. Excess water penetrates the gas diffusion layer and then is discharged to the outside of the system.

There has been considerable research on fuel cells configured to be installed and used in fuel cell electric vehicles (hereinafter may be simply referred to as "vehicle").

For example, Patent Literature 1 discloses an insulating frame as the outer frame of a MEGA.

Patent Literature 2 discloses such a technique, that slits (accommodation portions) for accommodating the material of a frame member caused to flow by heat, are disposed in addition to the slits of flow paths.
Patent Literature 1: Japanese Patent Application Laid-Open (JP-A) No. 2017-117780
Patent Literature 2: JP-A No. 2019-057479

In the insulating frame (frame) of Patent Literature 1, in the vicinity of the manifolds, gas is supplied to the manifolds through the slit formed in the insulating frame. To pass the gas through the slit, the insulating frame needs to have a certain thickness. However, if the thickness of the insulating frame is increased, the thickness of the cell increases. Also, there is a problem in that the gas flow path from the MEGA to the slit is narrowed and results in high pressure loss. US 2020/0185747 A1 discloses an elastomeric frame for a fuel cell. US 2019/0173102 A1 discloses a structure for a single fuel cell with improved robustness.

### SUMMARY

The disclosed embodiments were achieved in light of the above circumstances. A main object of the disclosed embodiments is to provide a fuel cell configured to enable cell thickness reduction and low pressure loss.

In a first embodiment, there is provided a fuel cell according to claim 1.

The frame member may include an overlap region where at least a part of one surface of the skeleton and the whole fluid introduction and derivation site overlap.

A plan-view form of the flow paths between the convexities of the fluid introduction and derivation site, may be at least one form selected from the group consisting of a linear pectinate form, a curved pectinate form, a linear slit form and a curved slit form.

According to the disclosed embodiments, a fuel cell configured to enable cell thickness reduction and low pressure loss, is provided.

### BRIEF DESCRIPTION OF THE DRAWINGS

In the accompanying drawings,
FIG. 1 is a schematic view of an example of one surface (front surface) of the frame member included in the fuel cell of the disclosed embodiments;
FIG. 2 is a schematic view of an example of the other surface (back surface) of the frame member included in the fuel cell of the disclosed embodiments;
FIG. 3 is a schematic sectional view of an example of a section including the flow path in the vicinity of the manifolds of the fuel cell of the disclosed embodiments;
FIG. 4 is a schematic sectional view of an example of a section including the convexities in the vicinity of the manifolds of the fuel cell of the disclosed embodiments;
FIG. 5 is a schematic sectional view of another example of the section including the convexities in the vicinity of the manifolds of the fuel cell of the disclosed embodiments;
FIG. 6 is a schematic sectional view of an example of a section including a flow path in the vicinity of the manifolds of a conventional fuel cell; and
FIG. 7 is a schematic sectional view of an example of a section not including the flow path in the vicinity of the manifolds of the conventional fuel cell.

### DETAILED DESCRIPTION

The fuel cell of the disclosed embodiments is a fuel cell comprising:
a membrane electrode gas diffusion layer assembly,
a frame member disposed around the membrane electrode gas diffusion layer assembly, and
a pair of separators stacked on the frame member to sandwich the membrane electrode gas diffusion layer assembly and the frame member,
wherein the separators include separator-side manifolds;
wherein the frame member includes a skeleton connecting to the membrane electrode gas diffusion layer assembly, an opening for housing the membrane electrode gas diffusion layer assembly, frame member-side manifolds aligned and disposed to communicate with the separator-side manifolds, and a fluid introduction and derivation site between the opening and the frame member-side manifolds;
wherein the fluid introduction and derivation site includes convexities to form a flow path for delivering a fluid in a horizontal direction of the frame member; and
wherein a thickness of the convexities is larger than a thickness of the skeleton.

In a conventional frame member, a flow path is formed by such a pectinate form, that slits (through holes) are formed in the vicinity of manifolds. The thickness of the conventional frame member is constant from the end of a MEGA to the manifolds. If the whole thickness of the frame member is reduced for cell size reduction, the groove depth of the slits are decreased, and the sectional area of the flow path from the manifolds to the end of the MEGA is decreased, resulting in high pressure loss.

The frame member included in the fuel cell of the disclosed embodiments is such that the thickness differs between the skeleton and the fluid introduction and derivation site, and the whole thickness is not constant. Since the frame member is thick at the fluid introduction and derivation site, the height (thickness) of the whole frame member is ensured. As a result, the thickness of the skeleton from the opening for housing the MEGA to the fluid introduction and derivation site, can be reduced. Accordingly, the sectional area of the flow path from the opening for housing the MEGA to the fluid introduction and derivation site, can be increased; pressure loss per cell can be decreased; and the whole cell can be low in pressure loss. In the fluid introduction and derivation site, the length of the convexities can be made shorter than the length of conventional slits. Accordingly, the height of the convexities can be decreased by a decreased pressure loss amount, and the cell thickness can be the same as or smaller than before.

The fuel cell of the present disclosure comprises the membrane electrode gas diffusion layer assembly, the frame member, and the pair of separators.

The fuel cell may be a single unit fuel cell including a membrane electrode gas diffusion layer assembly, a frame member and pair of separators, or it may be a fuel cell stack composed of stacked unit fuel cells.

For the fuel cell stack, the number of the stacked unit fuel cells is not particularly limited. For example, two to several hundred unit fuel cells may be stacked, or 2 to 200 unit fuel cells may be stacked.

The fuel cell stack may include an end plate at both stacking-direction ends of each unit fuel cell.

As needed, the fuel cell stack may include a gasket between the separators of the adjacent unit fuel cells. The gasket may be composed of silicone rubber, for example.

The membrane electrode gas diffusion layer assembly includes an anode-side gas diffusion layer, an anode catalyst layer, an electrolyte membrane, a cathode catalyst layer and a cathode-side gas diffusion layer in this order.

The cathode (oxidant electrode) includes a cathode catalyst layer and a cathode-side gas diffusion layer.

The anode (fuel electrode) includes an anode catalyst layer and an anode-side gas diffusion layer.

The cathode catalyst layer and the anode catalyst layer may contain a catalyst metal for accelerating an electrochemical reaction, a proton-conducting electrolyte, and electron-conducting carbon particles, for example.

As the catalyst metal, for example, platinum (Pt) or an alloy of Pt and another metal (such as Pt alloy mixed with cobalt, nickel or the like) may be used.

The electrolyte may be fluorine resin or the like. As the fluorine resin, for example, a Nafion solution may be used.

The catalyst metal is supported on carbon particles. In each catalyst layer, the carbon particles supporting the catalyst metal (i.e., catalyst particles) and the electrolyte may be mixed.

As the carbon particles for supporting the catalyst metal (i.e., supporting carbon particles), for example, water repellent carbon particles obtained by enhancing the water repellency of commercially-available carbon particles (carbon powder) by heating, may be used.

The anode-side gas diffusion layer and the cathode-side gas diffusion layer are collectively referred to as "gas diffusion layer".

The gas diffusion layer may be a gas-permeable, electroconductive member or the like.

As the electroconductive member, examples include, but are not limited to, a porous carbon material such as carbon cloth and carbon paper, and a porous metal material such as metal mesh and foam metal.

The electrolyte membrane may be a solid polymer electrolyte membrane. As the solid polymer electrolyte membrane, examples include, but are not limited to, a hydrocarbon electrolyte membrane and a fluorine electrolyte membrane such as a water-containing, thin perfluorosulfonic acid membrane. The electrolyte membrane may be a Nafion membrane (manufactured by DuPont), for example.

The pair of separators are stacked on the frame member to sandwich the membrane electrode gas diffusion layer assembly and the frame member. One of the separators is an anode-side separator, and the other is a cathode-side separator. In the disclosed embodiments, the anode-side and cathode-side separators are collectively referred to as "separator".

The separator includes separator-side manifolds such as supply and discharge holes for delivering the fluid in the unit fuel cell stacking direction.

The fluid may be a reaction gas, a refrigerant (cooling water), etc. As the refrigerant, for example, a mixed solution of ethylene glycol and water may be used to prevent freezing at low temperature. The reaction gas is fuel gas or oxidant gas. The fuel gas may be hydrogen or the like. The oxidant gas may be oxygen, air, dry air, or the like.

As the supply hole, examples include, but are not limited to, a fuel gas supply hole, an oxidant gas supply hole and a refrigerant supply hole.

As the discharge hole, example include, but are not limited to, a fuel gas discharge hole, an oxidant gas discharge hole and a refrigerant discharge hole.

As the separator-side manifolds, the separator may include one or more fuel gas supply holes, one or more oxidant gas supply holes, one or more refrigerant supply holes, one or more fuel gas discharge holes, one or more oxidant gas discharge holes, and one or more refrigerant discharge holes.

The separator may include a reaction gas flow path on the surface in contact with the gas diffusion layer. On the opposite surface to the surface in contact with the gas diffusion layer, the separator may include a refrigerant flow path for keeping the fuel cell temperature at a constant level.

When the separator is the anode-side separator, it may include one or more fuel gas supply holes, one or more oxidant gas supply holes, one or more refrigerant supply holes, one or more fuel gas discharge holes, one or more oxidant gas discharge holes, and one or more refrigerant discharge holes. On the surface in contact with the anode-side gas diffusion layer, it may include a fuel gas flow path for delivering the fuel gas from the fuel gas supply hole to the fuel gas discharge hole. On the opposite surface to the surface in contact with the anode-side gas diffusion layer, it may include a refrigerant flow path for delivering the refrigerant from the refrigerant supply hole to the refrigerant discharge hole.

When the separator is the cathode-side separator, it may include one or more fuel gas supply holes, one or more oxidant gas supply holes, one or more refrigerant supply holes, one or more fuel gas discharge holes, one or more oxidant gas discharge holes, and one or more refrigerant discharge hole. On the surface in contact with the cathode-side gas diffusion layer, it may include an oxidant gas flow path for delivering the oxidant gas from the oxidant gas supply hole to the oxidant gas discharge hole. On the opposite surface to the surface in contact with the cathode-side gas diffusion layer, it may include a refrigerant flow path for delivering the refrigerant from the refrigerant supply hole to the refrigerant discharge hole.

Between the supply and discharge holes through which the reaction gas or refrigerant passes, the reaction gas flow path and the refrigerant flow path may include a branched site where the flow path branches into several flow paths in the vicinity of the supply hole, and a junction where the branched flow paths join together in the vicinity of the discharge hole.

The separator may be a gas-impermeable, electroconductive member, etc. As the electroconductive member, examples include, but are not limited to, gas-impermeable dense carbon obtained by carbon densification, and a metal plate (such as an iron plate, an aluminum plate, a titanium plate and a stainless-steel plate) obtained by press molding. The separator may have a current collection function.

The frame member is disposed around the membrane electrode gas diffusion layer assembly and attaches the pair of separators to each other.

The frame member is a frame-shaped member disposed between the pair of separators (the anode-side and cathode-side separators) of the fuel cell and around (the periphery of) the membrane electrode gas diffusion layer assembly.

Also, the frame member is a member for preventing a cross leak or an electrical short between the catalyst layers of the membrane electrode gas diffusion layer assembly.

The frame member includes the skeleton, the opening, the frame member-side manifolds and the fluid introduction and derivation site.

The opening is a region retaining the membrane electrode gas diffusion layer assembly, and it is also a through hole which passes through a part of the skeleton for housing the membrane electrode gas diffusion layer assembly. In the frame member, the opening may be disposed at the position where the frame member is disposed around (the periphery of) the membrane electrode gas diffusion layer assembly, or the opening may be disposed at the center of the frame member.

The frame member-side manifolds are through holes passing through a part of the skeleton, and they are aligned and disposed to communicate with the separator-side manifolds.

As the frame member-side manifolds, the frame member may include a fuel gas supply hole, an oxidant gas supply hole, a refrigerant supply hole, a fuel gas discharge hole, an oxidant gas discharge hole and a refrigerant discharge hole, all of which are aligned and disposed to communicate with the fuel gas supply hole, the oxidant gas supply hole, the refrigerant supply hole, the fuel gas discharge hole, the oxidant gas discharge hole and the refrigerant discharge hole as the separator-side manifolds of the separator.

In the disclosed embodiments, the frame member-side manifolds and the separator-side manifolds are collectively referred to as "manifold". The manifolds communicate with the frame member and the separators, and the fluid passes therethrough.

The fuel cell stack may include a manifold such as an inlet manifold communicating between the supply holes and an outlet manifold communicating between the discharge holes.

As the inlet manifold, examples include, but are not limited to, an anode inlet manifold, a cathode inlet manifold and a refrigerant inlet manifold.

As the outlet manifold, examples include, but are not limited to, an anode outlet manifold, a cathode outlet manifold and a refrigerant outlet manifold.

The skeleton is a main part of the frame member, and it connects to the membrane electrode gas diffusion layer assembly.

The thickness of the skeleton may be 100 um or more, may be 120 um, or may be 150 um or less.

The skeleton of the frame member may include a frame-shaped resin core layer and two frame-shaped adhesive layers disposed on both surfaces of the core layer, that is, first and second adhesive layers.

As with the core layer, the first and second adhesive layers may be disposed in a frame shape on both surfaces of the core layer.

The core layer may be a structural member which has gas sealing properties and insulating properties. The core layer may be formed of such a material, that the structure is unchanged at the temperature of hot pressing in a fuel cell production process. As the material for the core layer, examples include, but are not limited to, resins such as polyethylene, polypropylene, polycarbonate (PC), polyphenylene sulfide (PPS), polyethylene terephthalate (PET), polyethylene naphthalate (PEN), polyamide (PA), polyimide (PI), polystyrene (PS), polyphenylene ether (PPE), polyether ether ketone (PEEK), cycloolefin, polyethersulfone (PES), polyphenylsulfone (PPSU), liquid crystal polymer (LCP) and epoxy resin; alloy resins thereof; and rubber materials such as ethylene propylene diene rubber (EPDM), fluorine-based rubber and silicon-based rubber.

From the viewpoint of ensuring insulating properties, the thickness of the core layer may be 5 um or more, or it may be 30 um or more. From the viewpoint of reducing the cell thickness, the thickness of the core layer may be 100 um or less, or it may be 90 um or less.

To attach the core layer and the anode-side and cathode-side separators and ensure sealing properties, the first and second adhesive layers may have the following properties: the first and second adhesive layers have high adhesion to other substances; they are softened at the temperature of hot pressing; and they have lower viscosity and lower melting point than the core layer. More specifically, the first and second adhesive layers may be thermoplastic resin such as polyester-based resin and modified olefin-based resin, or they may be thermosetting resin such as modified epoxy resin. For example, the first and second adhesive layers may be maleic anhydride-modified polyethylene, maleic anhydride-modified polypropylene, epoxy-modified polyethylene, epoxy-modified polypropylene, acid-modified polyethylene, acid-modified polypropylene, or the like.

The resin for forming the first adhesive layer and the resin for forming the second adhesive layer may be the same kind of resin, or they may be different kinds of resins. By disposing the adhesive layers on both surfaces of the core layer, it becomes easy to attach the resin frame and the two separators by hot pressing.

From the viewpoint of ensuring adhesion, the thickness of the first and second adhesive layers may be 5 um or more, or it may be 30 um or more. From the viewpoint of reducing the cell thickness, the thickness of the first and second adhesive layers may be 100 um or less, or it may be 40 um or less.

In the frame member, the first adhesive layer may be disposed at only a part that is attached to the anode-side separator, and the second adhesive layer may be disposed at only a part that is attached to the cathode-side separator. The first adhesive layer disposed on one surface of the core layer may be attached to the cathode-side separator. The second adhesive layer disposed on the other surface of the core layer may be attached to the anode-side separator. Then, the resin frame may be sandwiched by the pair of separators.

The fluid introduction and derivation site allows the fluid to be introduced from the supply hole to the MEGA, or it allows the fluid to be derived from the MEGA to the discharge hole. The fluid introduction and derivation site disposed in the vicinity of or adjacent to the supply hole is a fluid introduction site. On the other hand, the fluid introduction and derivation site disposed in the vicinity of or adjacent to the discharge hole is a fluid derivation site. In the disclosed embodiments, the fluid introduction site and the fluid derivation site are collectively referred to as "fluid introduction and derivation site".

At least one fluid introduction and derivation site is disposed in the desired region between the opening and the frame member-side manifolds. The fluid introduction and derivation site may be disposed adjacent to the frame member-side manifolds, or it may be disposed at a given interval. The position to dispose the fluid introduction and derivation site may be appropriately controlled so that, when sandwiched by the pair of separators, a flow path with the desired sectional area is obtained. On one surface of the frame member, the fluid introduction and derivation site may be disposed in the vicinity of each of the supply and discharge holes corresponding to the type of the fluid, or the fluid introduction and derivation site may be disposed adjacent to each of the supply and discharge holes corresponding to the type of the fluid. The same number of fluid introduction and derivation sites as that of the frame member-side manifolds, may be disposed at given intervals in the vicinity of the frame member-side manifolds, or they may be disposed adjacent to the frame member-side manifolds.

The fluid introduction and derivation site includes the convexities to form the flow path for delivering the fluid in the horizontal direction of the frame member, and the thickness of the convexities is larger than the thickness of the skeleton. In the fluid introduction and derivation site, the region other than the convexities may have the same thickness and material constitution as the skeleton, or the thickness and material constitution of the region may be different from those of the skeleton.

From the viewpoint of facilitation of injection molding, the thickness of the convexities may be 200 um or more, or it may be 240 um or more. From the viewpoint of reducing the cell thickness, the thickness of the convexities may be 300 um or less, or it may be 270 um or less.

The length of the convexities is not particularly limited, as long as it is a length such that the flow paths can be formed between the convexities. The length of the convexities may be appropriately determined depending on the scale of the frame member.

A conventional frame member is composed of resin, and slits are formed in the vicinity of manifolds. Due to the slits, a flow path is formed when the frame member is sandwiched by two separators. Two of the four sides of the section of the flow path, are composed of metal, and the remaining two sides are composed of resin. The hydrophilicity of the flow path is relatively high, and the water discharge property thereof is not sufficient.

In the fuel cell of the disclosed embodiments, the fluid introduction and derivation site are composed of resin. When the fluid introduction and derivation site is composed of the metal used in the separators, all of the four sides of the section of the flow path formed by the separators and the convexities of the fluid introduction and derivation site, are composed of metal. Accordingly, the contact angle of the flow path is small; the capillary pressure thereof is large; the hydrophilicity thereof is low; and the water discharge property thereof is not sufficient. Accordingly, in the fuel cell of the disclosed embodiments, both the skeleton and fluid introduction and derivation site of the frame member are composed of resin.

The frame member included in the fuel cell of the disclosed embodiments, includes the skeleton and the fluid introduction and derivation site. The fluid introduction and derivation site includes the convexities to form the flow path for delivering the fluid in the horizontal direction of the frame member, and the thickness of the convexities is larger than the thickness of the skeleton. Since the skeleton and the fluid introduction and derivation site are composed of resin, such a structure is obtained when the frame member is sandwiched by the two separators, that the flow path is formed by the separators and the convexities of the fluid introduction and derivation site, and three of the four sides of the section of the flow path and the remaining one side are composed of resin and metal, respectively. Accordingly, the contact angle of the flow path can be large compared to a conventional flow path, and the capillary pressure thereof can be decreased. Accordingly, the hydrophilicity thereof is increased, and the water discharge property thereof is enhanced. In addition, due to the flow path structure such that three of the four sides of the section of the flow path and the remaining one side are composed of resin and metal, respectively, the two separators sandwiching the frame member are not exposed. Accordingly, an electrical short is less likely to occur, and insulating treatment and so on of the separators are not needed.

In the frame member, the vicinity site of the frame member-side manifolds of the convexities of the fluid introduction and derivation site, is in the form following the flange in the vicinity of the separator-side manifolds of the separators. Accordingly, the gap of the flanges of the separators is decreased, and the amount of residual water is decreased. Accordingly, the heat capacity of the fuel cell when started below the freezing point, can be decreased; moreover, the corrosion of the separators by the concentration of residual water, etc., is expected to be mitigated. The vicinity site of the frame member-side manifolds of the convexities of the fluid introduction and derivation site, and the site other than the vicinity site may have the same thickness or different thicknesses. From the viewpoint of further decreasing the gap of the flanges of the separators, they may have the same thickness. Accordingly, the convexities of the fluid introduction and derivation site may be in the form following the flange in the vicinity of the separator-side manifolds of the separators.

In the frame member, the fluid introduction and derivation site and the skeleton are composed of members that are separable from each other. Accordingly, the production of the frame member becomes easy; the height of the convexities of the fluid introduction and derivation site can be easily controlled; the water discharge property of the flow path formed by the separators and the convexities of the fluid introduction and derivation site, can be enhanced: the flow rate of the fluid can be easily controlled to a certain level; and a further decrease in pressure loss can be achieved.

Also, the frame member includes the overlap region where at least a part of one surface of the skeleton and at least a part of the fluid introduction and derivation site overlap. Accordingly, the formation of a gap between the fluid introduction and derivation site and the skeleton in the production of the frame member, can be suppressed, and a contact between the separators due to the presence of the gap, can be suppressed. Also in this case, even if the fluid introduction and derivation site is made of metal, in the overlap region, the bottom surface of the section of the flow path formed by the convexities and the separators, is composed of resin. Accordingly, a contact between the separators can be suppressed.

The overlap region is the region where at least a part of one surface of the skeleton and at least a part of the fluid introduction and derivation site overlap, and at least a part of one surface of the skeleton and the whole fluid introduction and derivation site may overlap.

The plan-view form of the flow paths between the convexities of the fluid introduction and derivation site, may be at least one form selected from the group consisting of a linear pectinate form, a curved pectinate form, a linear slit form and a curved slit form.

In the case where the frame member is sandwiched by the pair of separators, the form of the surface of the separators at the position corresponding to the fluid introduction and derivation site, is not particularly limited, as long as the flow path can be obtained. It is difficult to obtain the flow path with the desired sectional area, if the fluid introduction and derivation site is aligned to engage with the concaves and convexities of the separators. On the other hand, if the convexities of the separators are aligned with the convexities of the fluid introduction and derivation site, the sectional area of the flow path in the aligned region increases, resulting in a decrease in pressure loss. However, the cell thickness increases. Accordingly, from the viewpoint of obtaining the flow path with the desired sectional area and reducing the cell size, the surface of the separators at the position corresponding to the fluid introduction and derivation site may be a flat and smooth surface.

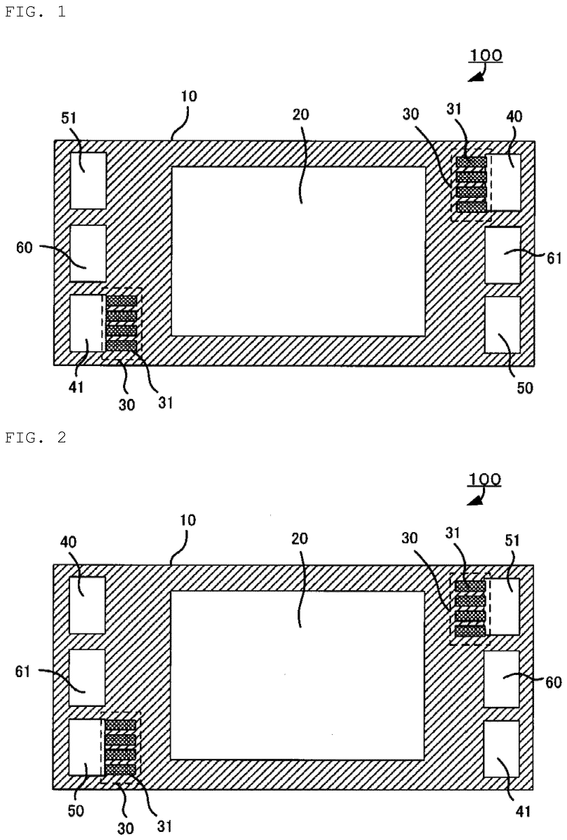

FIG. 1 is a schematic view of an example of one surface (front surface) of the frame member included in the fuel cell of the disclosed embodiments.

A frame member 100 shown in FIG. 1 includes a skeleton 10, an opening 20, a fluid introduction and derivation site 30, a fuel gas supply hole 40, a fuel gas discharge hole 41, an oxidant gas supply hole 50, an oxidant gas discharge hole 51, a refrigerant supply hole 60 and a refrigerant discharge hole 61. The fluid introduction and derivation site 30 includes convexities 31. The fluid introduction and derivation site 30 is disposed at two locations of the frame member 100. The fluid introduction and derivation site 30 at the first location is disposed adjacent to the fuel gas supply hole 40. The fluid introduction and derivation site 30 at the second location is disposed adjacent to the fuel gas discharge hole 41.

As shown in FIG. 1, in the frame member 100, the convexities 31 are disposed in place of slits (through holes) that a conventional frame member possesses. The height (thickness) of the whole frame member 100 can be ensured by the convexities 31. Accordingly, the thickness of the skeleton 10 can be designed to be smaller than before; the sectional area of the flow path from the manifolds to the MEGA can be large; and a decrease in pressure loss can be achieved.

FIG. 2 is a schematic view of an example of the other surface (back surface) of the frame member included in the fuel cell of the disclosed embodiments. Of the sites shown in FIG. 2, the same sites as FIG. 1 will not be described here for simplicity.

In the frame member 100 shown in FIG. 2, the fluid introduction and derivation site 30 is disposed at two locations of the frame member 100. The fluid introduction and derivation site 30 at the first location is disposed adjacent to the oxidant gas supply hole 50. The fluid introduction and derivation site 30 at the second location is disposed adjacent to the oxidant gas discharge hole 51.

As shown in FIGS. 1 and 2, on one surface of the frame member 100, the fluid introduction and derivation site 30 may be disposed in the vicinity of each of the supply and discharge holes corresponding to the type of the fluid, or the fluid introduction and derivation site 30 may be disposed adjacent to each of the supply and discharge holes corresponding to the type of the fluid. To make the height of the whole frame member 100 uniform, the fluid introduction and derivation site 30 may be disposed in the vicinity of all of the supply and discharge holes on both surfaces of the frame member 100, or the fluid introduction and derivation site 30 may be disposed adjacent to all of the supply and discharge holes on both surfaces of the frame member 100.

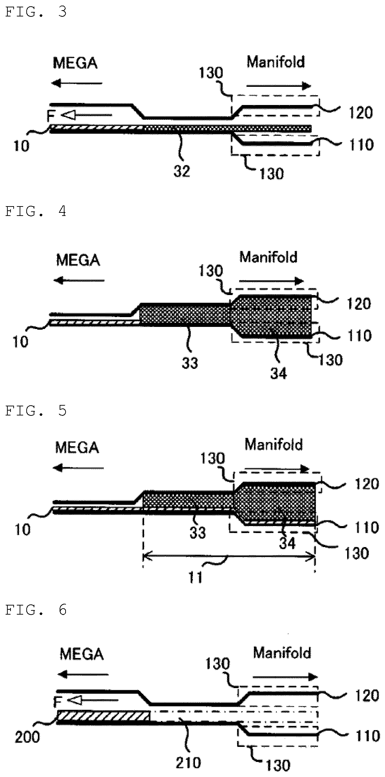

FIG. 3 is a schematic sectional view of an example of a section including the flow path in the vicinity of the manifolds of the fuel cell of the disclosed embodiments.

In the vicinity of the manifolds of the fuel cell, the frame member is sandwiched by an anode-side separator 110 and a cathode-side separator 120. Each of the anode anode-side separator 110 and the cathode-side separator 120 includes a flange 130 which is indicated by a dashed line. The frame member includes the skeleton 10 and a fluid introduction and derivation site flow path forming region 32. A white arrow F indicates the flow of the fluid. Of two black arrows, one indicates a MEGA side, and the other indicates a manifold side. The fluid introduction and derivation site flow path forming region 32 is a region between the convexities of the fluid introduction and derivation site, and it allows the fluid to flow through the region. Since the fluid introduction and derivation site can ensure the height of the whole frame member, the thickness of the skeleton 10 shown in FIG. 3 can be smaller than the thickness of a conventional frame member including slits.

FIG. 4 is a schematic sectional view of an example of a section including the convexities in the vicinity of the manifolds of the fuel cell of the disclosed embodiments. In the vicinity of the manifolds of the fuel cell, the frame member is sandwiched by the anode-side separator 110 and the cathode-side separator 120. The frame member includes the skeleton 10 and the convexity 33 of the fluid introduction and derivation site, and a convexity manifold vicinity region 34 is in the form following the flange 130 of each of the anode-side separator 110 and the cathode-side separator 120. Accordingly, the gap between the separators can be filled up; the amount of residual water can be decreased; and a decrease in pressure loss can be achieved.

FIG. 5 is a schematic sectional view of another example of the section including the convexities in the vicinity of the manifolds of the fuel cell of the disclosed embodiments. Of the sites shown in FIG. 5, the same sites as FIG. 4 will not be described here for simplicity. As shown in FIG. 5, on the surface of the skeleton 10, the frame member includes an overlap region 11 where the convexity 33 of the fluid introduction and derivation site and the convexity manifold vicinity region 34 are disposed. Accordingly, the formation of a gap between the fluid introduction and derivation site and the skeleton in the production of the frame member can be suppressed, and a contact between the separators due to the presence of the gap can be suppressed.

FIG. 6 is a schematic sectional view of an example of a section including a flow path in the vicinity of the manifolds of a conventional fuel cell. Of the sites shown in FIG. 6, the same sites as FIG. 3 will not be described here for simplicity.

In the vicinity of the manifolds of the conventional fuel cell, a conventional frame member 200 is sandwiched by the anode-side separator 110 and the cathode-side separator 120. The conventional frame member 200 includes a slit 210 which is indicated by a long dashed short dashed line. To ensure the desired depth of the slit 210, the conventional frame member 200 shown in FIG. 6 needs to ensure a given thickness, and the cell thickness increases. If the thickness of the frame member 200 is made smaller than the given thickness to reduce the cell thickness, the desired depth of the slit 210 cannot be ensured, resulting in an increase in pressure loss.

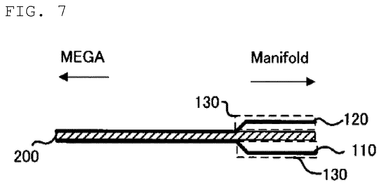

FIG. 7 is a schematic sectional view of an example of a section not including the flow path in the vicinity of the manifolds of the conventional fuel cell. Of the sites shown in FIG. 7, the same sites as FIG. 6 will not be described here for simplicity. Since the conventional frame member 200 shown in FIG. 7 is designed to have a uniform thickness as a whole, it cannot be in the form following the flange 130 of each of the anode-side separator 110 and the cathode-side separator 120. Accordingly, the gap of the flange 130 increases, and the amount of residual water in the vicinity of the manifolds increases.

### REFERENCE SIGNS LIST

10: Skeleton
11: Overlap region
20: Opening
30: Fluid introduction and derivation site
31: Convexity
32: Fluid introduction and derivation site flow path forming region
33: Convexity
34: Convexity manifold vicinity region
40: Fuel gas supply hole
41: Fuel gas discharge hole
50: Oxidant gas supply hole
51: Oxidant gas discharge hole
60: Refrigerant supply hole
61: Refrigerant discharge hole
100: Frame member
110: Anode-side separator
120: Cathode-side separator
130: Flange
200: Conventional frame member
210: Slit
F: Fluid flow

## Claims

1. A fuel cell comprising:
a membrane electrode gas diffusion layer assembly,
a frame member (100) disposed around the membrane electrode gas diffusion layer assembly, and
a pair of separators (110, 120) stacked on the frame member (100) to sandwich the membrane electrode gas diffusion layer assembly and the frame member (100),
wherein the separators (110, 120) include separator-side manifolds;
wherein the frame member (100) includes a skeleton (10) connecting to the membrane electrode gas diffusion layer assembly, an opening (20) for housing the membrane electrode gas diffusion layer assembly, frame member-side manifolds aligned and disposed to communicate with the separator-side manifolds, and a fluid introduction and derivation site (30) between the opening (20) and the frame member-side manifolds;
wherein the fluid introduction and derivation site (30) includes convexities (31) to form a flow path for delivering a fluid in a horizontal direction of the frame member (100);
wherein a thickness of the convexities (31) is larger than a thickness of the skeleton (10),
**characterized in that**:
the skeleton (10) and fluid introduction and derivation site (30) of the frame member (100) are composed of resin;
the fluid introduction and derivation site (30) and the skeleton (10) are composed of members that are separable from each other, and the frame member (100) includes an overlap region (11) where at least a part of one surface of the skeleton (10) and at least a part of the fluid introduction and derivation site (30) overlap; and
a vicinity site of the frame member-side manifolds of the convexities (31) of the fluid introduction and derivation site (30), is in a form following a flange (130) in the vicinity of the separator-side manifolds of the separators (110, 120).

2. The fuel cell according to Claim 1, wherein the frame member (100) includes an overlap region (11) where at least a part of one surface of the skeleton (10) and the whole fluid introduction and derivation site (30) overlap.

3. The fuel cell according to Claim 1 or 2, wherein a plan-view form of the flow paths between the convexities (31) of the fluid introduction and derivation site (30), is at least one form selected from the group consisting of a linear pectinate form, a curved pectinate form, a linear slit (210) form and a curved slit (210) form.

## Patentansprüche

1. Brennstoffzelle, umfassend
eine Membran-Elektroden-Gasdiffusionsschichtanordnung,
ein Rahmenelement (100), das um die Membran-Elektroden-Gasdiffusionsschichtanordnung herum angeordnet ist, und
ein Paar von Separatoren (110, 120), die auf dem Rahmenelement (100) gestapelt sind, um die Membran-Elektroden-Gasdiffusionsschichtanordnung und das Rahmenelement (100) schichtenweise anzuordnen,
wobei die Separatoren (110, 120) separatorseitige Verteiler beinhalten;
wobei das Rahmenelement (100) ein Gerippe (10), das mit der Membran-Elektroden-Gasdiffusionsschichtanordnung verbunden ist, eine Öffnung (20) für die Aufnahme der Membran-Elektroden-Gasdiffusionsschichtanordnung, rahmenelementseitige Verteiler, die ausgerichtet und angeordnet sind, um mit den separatorseitigen Verteilern in Verbindung zu stehen, und eine Fluideinleitungs- und -ableitungsstelle (30) zwischen der Öffnung (20) und den rahmenelementseitigen Verteilern beinhaltet;
wobei die Fluideinleitungs- und -ableitungsstelle (30) Wölbungen (31) beinhaltet, um einen Strömungsweg für die Abgabe eines Fluids in einer horizontalen Richtung des Rahmenelements (100) auszubilden;
wobei eine Dicke der Wölbungen (31) größer ist als eine Dicke des Gerippes (10),
**dadurch gekennzeichnet, dass**:
das Gerippe (10) und die Fluideinleitungs- und -ableitungsstelle (30) des Rahmenteils (100) aus Harz bestehen;
die Fluideinleitungs- und -ableitungsstelle (30) und das Gerippe (10) aus Elementen bestehen, die voneinander trennbar sind, und das Rahmenelement (100) einen Überlappungsbereich (11) beinhaltet, in dem sich wenigstens ein Teil einer Oberfläche des Gerippes (10) und wenigstens ein Teil der Fluideinleitungs- und -ableitungsstelle (30) überlappen; und
eine Umgebungsstelle der rahmenelementseitigen Verteiler der Wölbungen (31) der Fluideinleitungs- und -ableitungsstelle (30) in einer Form vorliegt, die einem Flansch (130) in der Umgebung der separatorseitigen Verteiler der Separatoren (110, 120) folgt.

2. Brennstoffzelle nach Anspruch 1, wobei das Rahmenelement (100) einen Überlappungsbereich (11) beinhaltet, wo wenigstens ein Teil einer Oberfläche des Gerippes (10) und die gesamte Fluideinleitungs- und -ableitungsstelle (30) überlappen.

3. Brennstoffzelle nach Anspruch 1 oder 2, wobei eine Draufsichtform der Strömungswege zwischen den Wölbungen (31) der Fluideinleitungs- und -ableitungsstelle (30) wenigstens eine Form ist, die aus der Gruppe ausgewählt ist, bestehend aus einer linearen Pektinatform, einer gekrümmten Pektinatform, einer linearen Schlitz- (210) Form und einer gekrümmten Schlitz- (210) Form.

## Revendications

1. Pile à combustible comprenant :
un ensemble de couche de diffusion de gaz d'électrode à membrane,
un élément de cadre (100) disposé autour de l'ensemble de couche de diffusion de gaz d'électrode à membrane, et
une paire de séparateurs (110, 120) empilés sur l'élément de cadre (100) pour prendre en sandwich l'ensemble de couche de diffusion de gaz d'électrode à membrane et l'élément de cadre (100),
dans laquelle les séparateurs (110, 120) comprennent des collecteurs côté séparateur ;
dans laquelle l'élément de cadre (100) comprend un squelette (10) se connectant à l'ensemble de couche de diffusion de gaz d'électrode à membrane, une ouverture (20) pour loger l'ensemble de couche de diffusion de gaz d'électrode à membrane, des collecteurs côté élément de cadre alignés et disposés pour communiquer avec les collecteurs côté séparateur, et un site d'introduction et de dérivation de fluide (30) entre l'ouverture (20) et les collecteurs côté élément de cadre ;
dans laquelle le site d'introduction et de dérivation de fluide (30) comprend des convexités (31) pour former un trajet d'écoulement pour délivrer un fluide dans une direction horizontale de l'élément de cadre (100) ;
dans laquelle une épaisseur des convexités (31) est supérieure à une épaisseur du squelette (10),
**caractérisée en ce que** :
le squelette (10) et le site d'introduction et de dérivation de fluide (30) de l'élément de cadre (100) sont composés de résine ;
le site d'introduction et de dérivation de fluide (30) et le squelette (10) sont composés d'éléments qui sont séparables les uns des autres, et l'élément de cadre (100) comprend une région de chevauchement (11) où au moins une partie d'une surface du squelette (10) et au moins une partie du site d'introduction et de dérivation de fluide (30) se chevauchent ; et
un site à proximité des collecteurs côté élément de cadre des convexités (31) du site d'introduction et de dérivation de fluide (30), est sous une forme suivant une bride (130) à proximité des collecteurs côté séparateur des séparateurs (110, 120).

2. Pile à combustible selon la revendication 1, dans laquelle l'élément de cadre (100) comprend une région de chevauchement (11) où au moins une partie d'une surface du squelette (10) et l'ensemble du site d'introduction et de dérivation de fluide (30) se chevauchent.

3. Pile à combustible selon la revendication 1 ou 2, dans laquelle une forme en vue en plan des trajets d'écoulement entre les convexités (31) du site d'introduction et de dérivation de fluide (30) est au moins une forme choisie dans le groupe constitué par une forme pectinée linéaire, une forme pectinée incurvée, une forme en fente linéaire (210) et une forme en fente incurvée (210).
